# EUROPEAN PATENT APPLICATION

(11) **EP 4 462 865 A1**
(43) Date of publication of application: **13.11.2024**
(21) Application number: 23735158.0
(22) Date of filing: 03.01.2023
(51) Int. Cl.: H04W 36/00, H04W 72/23

(54) **METHOD FOR CHANGING CELL AND DEVICE THEREFOR**

(30) Priority: 03.01.2022 KR 20220000450; 21.12.2022 KR 20220181025
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/000063
(87) International publication number: WO 2023/128726

(57) **Abstract**

Provided are a method and a device for controlling cell change. The method may includereceiving a higher layer message including one or more candidate target cell configuration information for an L1/L2-triggered mobility (LTM) operation; transmitting an L1 measurement result for a candidate target cell on the basis of the higher layer message; receiving a medium access control control element (MAC CE) indicating performance of an LTM operation to a target cell; and performing a cell change operation without RRC reconfiguration by applying the candidate target cell configuration information for the target cell on the basis of the MAC CE.

## Description

### Technical Field

The disclosure relates to a method and device for changing a cell by a user equipment (UE).

### Background Art

The spread of small wireless communication devices, such as smartphones, is leading to an increase in the number. In particular, not only smartphones but also various forms of transportation, such as cars and airplanes, are equipped with wireless communication devices, making it possible to communicate while on the move.

When a wireless communication device moves, switches from one cell coverage to another. The development of high-speed transportation such as vehicles further increases the need for cell switching.

This cell switching process is called handover. Typically, a ser equipment (UE) in radio resource control (RRC) connected state performs handover through RRC signaling. When handover is performed based on Layer 3 (L3) signaling, the handover procedure between the base station, core network entity, and UE becomes complicated, and time consuming.

This complexity makes it difficult to meet low-latency, high-speed movement requirements for post-5G communication. In particular, as high-speed movement becomes more common, there is a need for technology for performing communication at the beam level, user communication quality. In this regards, there is a need for technology that achieves low latency and reduces overhead and interruption time during handover.

### Detailed Description of the Invention

### Technical Problem

The disclosure may provide a method and device for controlling a cell changing operation of a UE at a lower layer.

### Technical Solution

In an aspect, the disclosure may provide a method for performing a cell change operation by a user equipment (UE). The method may include receiving a higher layer message including one or more pieces of candidate target cell configuration information for an L1/L2-triggered mobility (LTM) operation, transmitting an L1 measurement result for a candidate target cell based on the higher layer message, receiving a medium access control control element (MAC CE) indicating to perform the LTM operation to a target cell, and performing the cell change operation without RRC reconfiguration by applying the candidate target cell configuration information for the target cell based on the MAC CE.

In another aspect, the disclosure may provide a method for controlling a cell change operation of a user equipment (UE) by a base station. The method may include transmitting a higher layer message including one or more pieces of candidate target cell configuration information for an L1/L2-triggered mobility (LTM) operation, receiving an L1 measurement result for a candidate target cell, determining to perform the LTM operation on a target cell based on the L1 measurement result, and transmitting a medium access control control element (MAC CE) indicating to perform the LTM operation to the target cell.

In an aspect, the disclosure may provide a user equipment (UE) performing a cell change operation. The UE may include a receiver receiving a higher layer message including one or more pieces of candidate target cell configuration information for an L1/L2-triggered mobility (LTM) operation, a transmitter transmitting an L1 measurement result for a candidate target cell based on the higher layer message, and a controller performing the cell change operation without RRC reconfiguration by applying the candidate target cell configuration information for a target cell based on a MAC CE, wherein the receiver receives the medium access control control element (MAC CE) indicating to perform the LTM operation to the target cell.

In another aspect, the disclosure may provide a base station controlling a cell change operation of a UE. The base station may include a transmitter transmitting a higher layer message including one or more pieces of candidate target cell configuration information for an L1/L2-triggered mobility (LTM) operation, a receiver receiving an L1 measurement result for a candidate target cell, and a controller determining to perform the LTM operation on a target cell based on the L1 measurement result, wherein the transmitter transmits a medium access control control element (MAC CE) indicating to perform the LTM operation to the target cell.

### Advantageous Effects

According to the present embodiments, cell switching may be performed quickly at a lower layer.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure.
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a flowchart for describing operations of a UE according to an embodiment;
FIG. 9 is a flowchart for describing operations of a base station according to an embodiment;
FIG. 10 is a view illustrating an example of a downlink L2 structure for an LTM radio bearer;
FIG. 11 is a view illustrating an example of an uplink L2 structure for an LTM radio bearer;
FIG. 12 is a view illustrating another example of a downlink L2 structure for an LTM radio bearer;
FIG. 13 is a view illustrating another example of an uplink L2 structure for an LTM radio bearer;
FIG. 14 is a block diagram illustrating a configuration of a UE according to another embodiment; and
FIG. 15 is a block diagram illustrating a configuration of a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

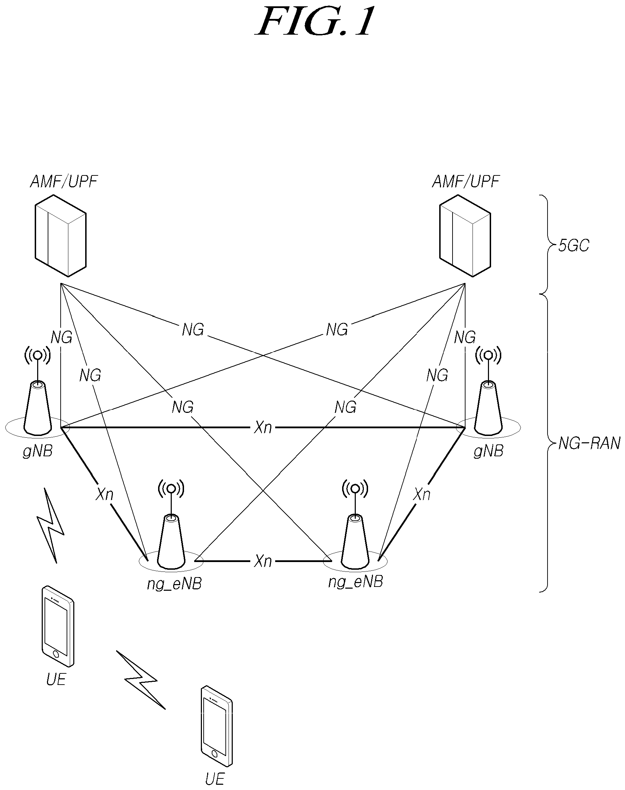

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols.

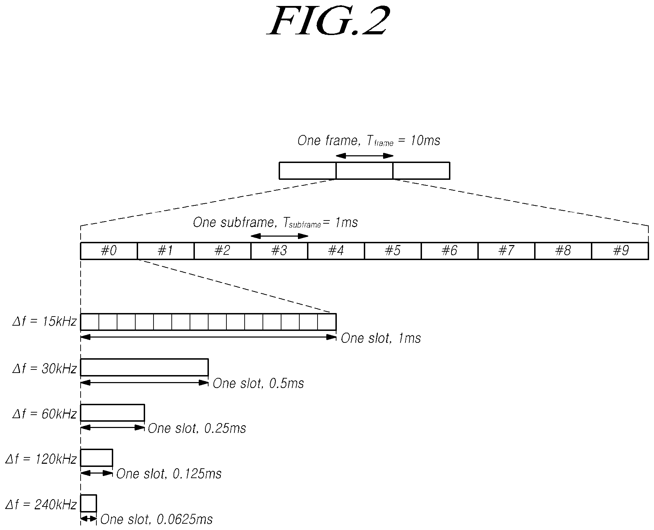

FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

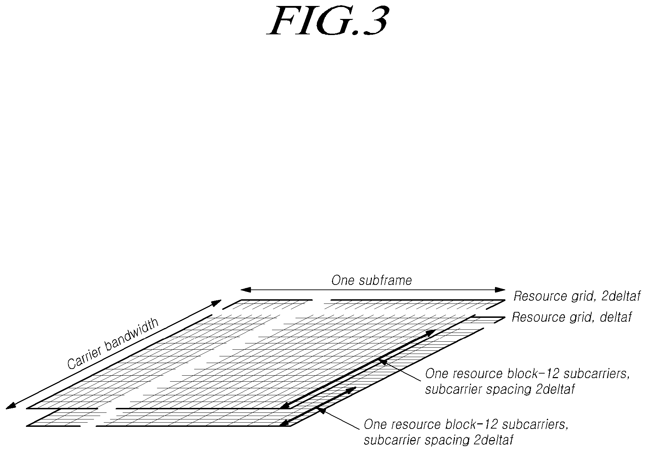

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

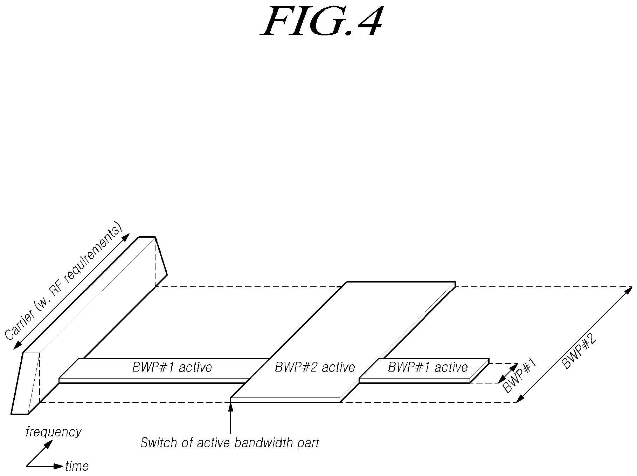

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

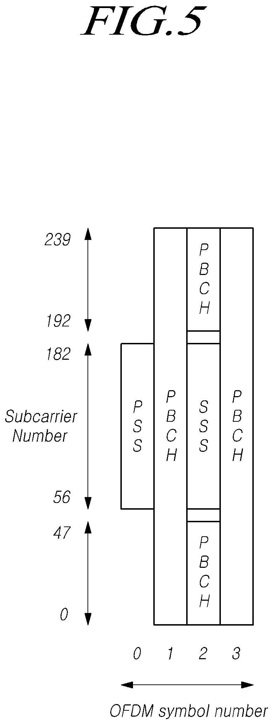

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

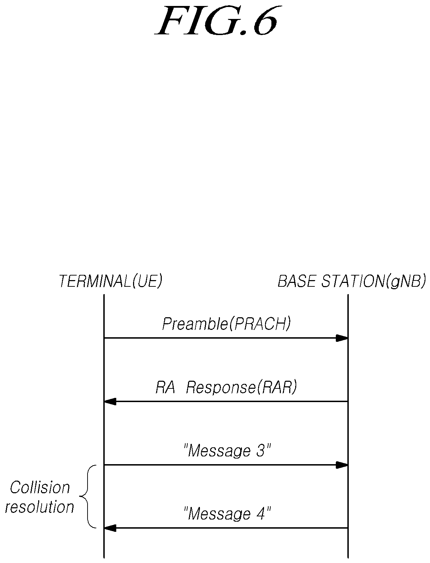

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

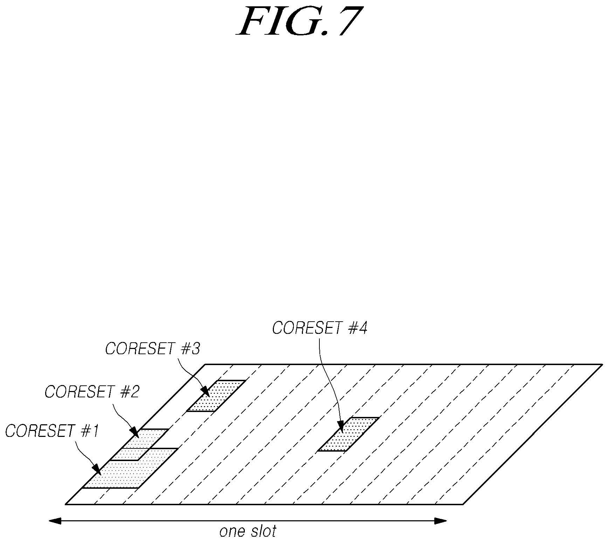

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR mobility

In typical NR technology, mobility control for cell change for the UE in the RRC connected state indicates handover through explicit RRC signaling. Cell change may be triggered by L3 measurement, and handover could be executed through RRC message signaling, which includes information necessary for accessing the target cell. This information may include one or more pieces of information among, e.g., reconfiguration with Sync, target cell ID, the new C-RNTI, the target gNB security algorithm identifiers for the selected security algorithms, a set of dedicated RACH resources, the association between RACH resources and SSB(s), the association between RACH resources and UE-specific CSI-RS configuration(s), common RACH resources, and system information of the target cell. When cell change is executed, the MAC entity of the corresponding cell group is reset. The UE applies the received new C-RNTI value as the C-RNTI of the cell group. The UE makes a configuration for the PHY/MAC/RLC/PDCP/SDAP layer according to the configuration information. This causes more delay, overhead, and interruption time than beam change (beam level mobility) within the same cell.

Beam level mobility does not require explicit RRC signaling to be triggered in the beam change process. The base station (network) may provide a measurement configuration including SSB/CSI resource and resource set, trigger state for triggering channel, and interference measurement and report configuration to the UE through RRC signaling. Beam level mobility may be provided through control signaling (e.g., DCI or MAC CE) of physical layer/MAC layer at a lower layer. SSB-based beam level mobility is based on the SSB associated with the initial downlink BWP. It may be configured only for the initial downlink BWP and downlink BWPs including the SSB associated with the initial downlink BWP. Beam level mobility for other DL BWPs could be performed based only on the CSI-RS. However, in the conventional art, beam switching supported only intra-cell mobility.

In related NR technology, cell level mobility (cell change) was provided based on L3 signaling, causing more delay, overhead, and interruption time than beam level mobility.

Conceived to address the foregoing issues, the disclosure introduces a procedure for providing a cell change (inter-cell mobility) based on L1/L2 (signaling), a specific method for signaling information, and a device for providing the same.

Hereinafter, a method for providing cell level mobility based on 5G NR radio access technology is described. However, this is for convenience of description, and the present method may be applied to any radio access technology (e.g., 6G)-based cell change. Embodiments described in the disclosure include information elements, procedures, and operation contents specified in any NR standard (e.g., TS 38.321 which is an NR MAC standard and TS 38.331 which is an NR RRC standard). Even if the definition of the corresponding information element, the related procedure, and the related UE operation contents are not described in the disclosure, the corresponding contents specified in the standard specifications, which are a known technology, may be included in the disclosure.

For convenience of description, a related scenario will be described first. However, this is for convenience of description, and the present embodiments may be applied to any network deployment scenario other than the following scenario.

An L1/L2 (signaling)-based cell change may be performed for a serving cell change (PCell change or SCell change) scenario in one cell group in an NR stand-alone structure or a serving cell change (SpCell (PCell/PSCell) change or SCell change) scenario in one cell group (e.g., MCG or SCG) in a dual-connectivity structure.

An intra-CU intra-DU L1/L2-based cell change may be performed between different cells associated with the corresponding DU in an intra-DU connected to the corresponding CU in an intra-CU (intra-CU). For example, the corresponding cells may have different physical cell IDs (PCIs) and may be inter-cell synchronized. Intra-CU inter-DU L1/L2-based cell change may be performed between cells associated with different DUs, respectively, for the different DUs connected to the corresponding CU within the intra-CU. For example, the corresponding cells may have different PCIs and may not be inter-cell synchronized. For another example, the corresponding cells may have different PCIs and may be inter-cell synchronized. Embodiments described below may be performed individually/independently or may be performed in any combination thereof. It is obvious that they are also included in the scope of the disclosure.

For convenience of description, a first transmit/receive point (TRP) may denote a transmit/receive point/TRP/beam/beams/beam group (BG) (via the corresponding TRP) providing one serving cell/PCell/SCell configured/activated in the UE. This is for convenience of description and may be replaced with any other name (e.g., primary/main/basic/SpCell associated/Serving cell associated TRP/beam/BG). A second transmit/receive point (TRP) denotes a transmit/receive point/TRP/beam/beams/beam group (BG) (via the corresponding TRP) providing a physical cell Id (PCI) different from the corresponding serving cell/PCell/SCell or a transmit/receive point/TRP/beam/beams/beam group (BG) (via the corresponding TRP) associated with the physical cell Id (PCI) different from the corresponding serving cell/PCell/SCell. This is also for convenience of description and may be replaced with any other name (e.g., secondary/additional/assisting/non-serving cell associated TRP/beam/BG). The cell associated with the second TRP or the second TRP may be configured/released in the UE. The cell associated with the second TRP or the second TRP may be activated/deactivated for the UE. One first TRP and one or more second TRPs may be provided/supported/configured/released/activated/inactivated for one UE.

For convenience of description, an L1/L2-trigged mobility (LTM) operation denotes a cell change that provides a low latency and a small interruption time based on L1/L2. This is for convenience of description and may be replaced with any other name (e.g., low latency handover, high speed HO, fast HO, low latency HO, L1/L2 signaling based HO, low layer signaling based HO). Here, L1/L2 may represent at least one of L1/L2 signaling (e.g., MAC-CE/DCI), L1/L2 execution instruction information, quasi co location (QCL)/transmission configuration indication (TCI) state activation/update/instruction, L1/L2 execution condition (based on L1 measurement), L1/L2 event (based on L1 measurement), L1/L2 procedure, and UE operation in L1/L2 layer.

For the LTM operation, any function described below may be defined as an individual UE capability and may be transmitted to the base station by the UE. Alternatively, any functions may be combined/merged to be defined as the corresponding UE capability and transmitted to the base station by the UE.

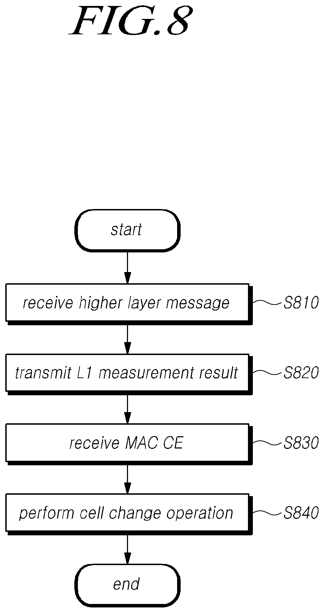

FIG. 8 is a flowchart for describing operations of a UE according to an embodiment;

Referring to FIG. 8, in a method of performing a cell change operation, the UE may perform the step of receiving an upper layer message including one or more candidate target cell configuration information for an LTM operation (S810).

According to an embodiment, the UE may receive an RRC message including one or more candidate target cell configuration information from a base station or a TRP. The RRC message may include one or more pieces of candidate target cell configuration information, and each piece of candidate target cell configuration information may be separately included for each candidate target cell.

According to an embodiment, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI). Other information is described in more detail below.

Meanwhile, the candidate target cell configuration information includes information for performing L1 measurement on the serving cell or the candidate target cell and transmitting the L1 measurement result. For example, the UE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information. For example, information such as the measurement period, the measurement target, the measurement reporting period, the measurement reporting resource, and the value related to the measurement reporting trigger condition may be included in the candidate target cell configuration information.

The UE may perform the step of transmitting the L1 measurement result for the candidate target cell based on the higher layer message (S820).

According to an embodiment, the UE may measure the channel state of the serving cell or the candidate target cell using information for transmitting the measurement result or the measurement included in the above-described candidate target cell configuration information. For example, the UE may measure L1-RSRP. As another example, the UE may measure L1-RSRQ. Further, the UE may measure the channel state for the serving cell or the candidate target cell using various measurement schemes capable of measuring the channel quality or the channel state.

Thereafter, the UE transmits the measurement result including the L1 measurement result to the base station. According to an embodiment, the UE may transmit the measurement result to the base station based on the information for transmission of the measurement result included in the candidate target cell configuration information. For example, when a condition for triggering transmission of the measurement result is met, the UE may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell. In other words, when comparing the measurement result of the source PSCell with the measurement result of the candidate target cell, comparison is performed by adding/subtracting an offset preset or included in the configuration information about the candidate target cell to/from the measurement result of the source PSCell. If the comparison result shows that the channel state of the candidate target cell is better, reporting of the measurement result may be triggered.

For example, the base station may determine whether to perform the LTM operation based on the L1 measurement result information of the UE. As another example, the base station may determine the target cell to be changed through the LTM operation based on the L1 measurement result information of the UE.

The UE may perform the step of receiving a medium access control control element (MAC CE) indicating to perform an LTM operation to the target cell (S830).

According to an embodiment, when the base station determines to change the cell of the corresponding UE based on the L1 measurement result information received from the UE, the base station may indicate the same through the MAC CE.

According to an embodiment, the UE may receive instruction information instructing to perform the LTM operation included in the MAC CE. According to another embodiment, the UE may identify information about the target cell included in the MAC CE and receive an LTM operation execution instruction to the target cell.

Through the MAC CE, the UE should obtain information about the target cell to instruct to perform an LTM operation and to perform the cell change. To that end, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may be composed of candidate target cell configuration information ID or index information. Further, the MAC CE may include at least one of the TCI state ID, the bandwidth part ID, and the TAG.

The UE may perform a cell change operation without RRC reconfiguration by applying the candidate target cell configuration information for the target cell based on the MAC CE (S840).

According to an embodiment, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the UE may identify the target cell through the MAC CE.

When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

Meanwhile, the one or more candidate target cell configuration information may be stored and applied in the UE until higher layer signaling for releasing the candidate target cell configuration information is received. For example, when the configuration information about the plurality of candidate target cells is received through the higher layer message, the UE may complete cell change to the corresponding target cell by applying any one of the configuration information about the candidate target cells through the above-described MAC CE. Even after the cell change is completed, the plurality of candidate target cell configuration information may still remain valid. Accordingly, when the MAC CE indicating the LTM operation is received from the base station again after the cell change, the UE performs the cell change operation by effectively using the stored candidate target cell configuration information.

The release, change, addition, etc. of the candidate target cell configuration information configured/stored in the UE may be performed only by separate higher layer signaling.

Through the above-described operations, the UE may quickly perform the cell change operation at the L1/L2 level. More detailed operations will be described below in greater detail through individual embodiments.

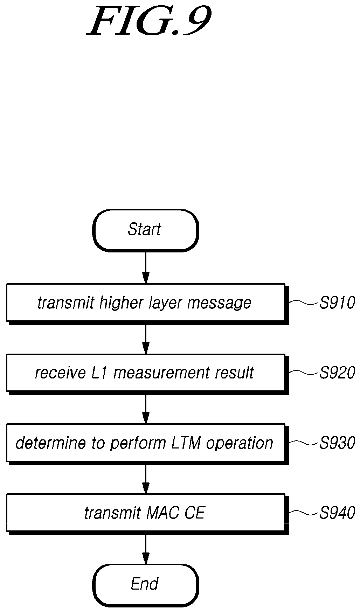

FIG. 9 is a flowchart for describing operations of a base station according to an embodiment.

Referring to FIG. 9, in a method of controlling a cell change operation of a UE, the base station may perform the step of transmitting a higher layer message including one or more pieces of candidate target cell configuration information for an L1/L2-triggered mobility (LTM) operation (S910).

According to an embodiment, the base station or the TRP may transmit an RRC message including one or more pieces of candidate target cell configuration information to the UE. The RRC message may include one or more pieces of candidate target cell configuration information, and each piece of candidate target cell configuration information may be separately included for each candidate target cell.

According to an embodiment, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information from another. The bandwidth part identification information may include an ID or an index for distinguishing the bandwidth part (BWP). The TCI state configuration information may include at least one of a TCI state ID, a cell index, a cell ID, and a physical cell identity (PCI). Other information will be described in more detail below.

Meanwhile, the candidate target cell configuration information includes information for performing L1 measurement on the serving cell or the candidate target cell and transmitting the L1 measurement result. According to an embodiment, the UE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information. For example, information such as the measurement period, the measurement target, the measurement reporting period, the measurement reporting resource, and the value related to the measurement reporting trigger condition may be included in the candidate target cell configuration information.

The base station may perform the step of receiving the L1 measurement result for the candidate target cell (S920).

According to an embodiment, the UE may measure the channel state of the serving cell or the candidate target cell using information for transmitting the measurement result or the measurement included in the above-described candidate target cell configuration information. For example, the UE may measure L1-RSRP. As another example, the UE may measure L1-RSRQ. Further, the UE may measure the channel state for the serving cell or the candidate target cell using various measurement schemes capable of measuring the channel quality or the channel state.

Thereafter, the base station receives the measurement result reporting including the L1 measurement result transmitted by the UE. According to an embodiment, the UE may transmit the measurement result to the base station based on the information for transmission of the measurement result included in the candidate target cell configuration information. For example, when a condition for triggering transmission of the measurement result is met, the UE may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell. In other words, when comparing the measurement result of the source PSCell with the measurement result of the candidate target cell, comparison is performed by adding/subtracting an offset preset or included in the configuration information about the candidate target cell to/from the measurement result of the source PSCell. If the comparison result shows that the channel state of the candidate target cell is better, reporting of the measurement result may be triggered.

The base station may perform the step of determining to perform the LTM operation on the target cell based on the L1 measurement result (S930).

In accordance with an embodiment, the base station may determine whether to perform the LTM operation based on the L1 measurement result information of the UE. According to another emodiment, the base station may determine the target cell to be changed through the LTM operation based on the L1 measurement result information of the UE.

As such, the base station may perform an LTM operation on the UE and determine a target cell to be changed by the UE based on the L1 measurement result received from the UE.

The base station may perform the step of transmitting a medium access control control element (MAC CE) instructing to perform an LTM operation to the target cell (S940).

According to an embodiment, when the base station determines to change the cell of the corresponding UE based on the L1 measurement result information received from the UE, the base station may indicate the same through the MAC CE.

According to an embodiment, the base station may include instruction information to instruct to perform the LTM operation in the MAC CE and transmit the same. According to another embodiment, the base station may include information about the target cell in the MAC CE and transmit the same.

Through the MAC CE, the UE may obtain information about the target cell to instruct to perform an LTM operation and to perform the cell change. For example, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may be composed of candidate target cell configuration information ID or index information. Further, the MAC CE may include at least one of the TCI state ID, the bandwidth part ID, and the TAG.

For example, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the UE may identify the target cell through the MAC CE.

When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

Meanwhile, the one or more candidate target cell configuration information may be stored and applied in the UE until higher layer signaling for releasing the candidate target cell configuration information is received. For example, when the configuration information about the plurality of candidate target cells is received through the higher layer message, the UE may complete cell change to the corresponding target cell by applying any one of the configuration information about the candidate target cells through the above-described MAC CE. Even after the cell change is completed, the plurality of candidate target cell configuration information may still remain valid. Accordingly, when the MAC CE indicating the LTM operation is received from the base station again after the cell change, the UE performs the cell change operation by effectively using the stored candidate target cell configuration information.

The release, change, addition, etc. of the candidate target cell configuration information configured/stored in the UE may be performed only by separate higher layer signaling.

Through the above-described operations, the UE may quickly perform the cell change operation at the L1/L2 level. More detailed operations will be described below in greater detail through individual embodiments.

### L1/L2-based cell change procedure

The procedure for providing the L1/L2-triggered mobility (LTM) operation may include a step in which the base station indicates a configuration for the LTM operation to the UE through RRC signaling for the candidate cell, a step in which the UE stores/applies the configuration for the LTM operation and executes/applies the L1/L2 signaling-based cell change. This will be described below.

The configuration for the LTM operation indicated through RRC signaling may include one or more pieces of information among an LTM candidate/target cell configuration, an LTM radio bearer configuration, an L1L2 signaling configuration for the LTM operation, an execution instruction information configuration for the LTM operation, a TCI state configuration for the LTM operation, and an execution condition/event configuration for the LTM operation.

When the UE receives the configuration for the LTM operation, the UE may store some or all of the configurations included in the corresponding configuration. When the UE receives the configuration for the LTM operation, the UE may apply part or all of the configurations included in the corresponding configuration. For example, the UE may define a UE variable for storing the corresponding configuration and may store part or all of the configurations for the LTM operation in the corresponding UE variable.

The UE may transmit an RRC reconfiguration complete message to the base station (through the source cell). The UE may maintain the source cell connection after receiving the configuration for the LTM operation. The UE may monitor/evaluate L1L2 signaling/execution instruction information/TCI state/execution condition/event for LTM operation for configured/stored candidate/target cell. Alternatively, the UE may start monitoring/evaluating L1L2 signaling/execution instruction information/TCI state/execution condition/event.

The LTM operation may be triggered/initiated/executed/applied based on L1L2 signaling/executive instruction information/TCI state/executive condition/event/related procedure/operation for the UE having the corresponding configuration preconfigured/stored through RRC. The L1L2 signaling/execution instruction information/TCI state indicated to the UE by the base station may be triggered/initiated/executed/applied by one or more of the execution condition/event configured in the UE by the base station and the L1/L2 procedure/operation defined in the UE. For example, the UE may execute/apply the corresponding configuration stored for the selected/instructed/triggered candidate/target cell.

For example, when the corresponding L1/L2 signaling is received, part or all of the candidate/target cell configuration (or the candidate/target cell configuration stored/preconfigured in the UE) included in the corresponding RRC reconfiguration message may be applied/executed. When the corresponding L1/L2 signaling is received, the UE may apply/execute the corresponding configuration stored for the selected candidate/target cell.

As another example, the corresponding candidate/target cell configuration may include one or more pieces of information among the cell group configuration (CellGroupConfig), the special cell configuration (SpCellConfig), information for identifying the corresponding cell (e.g., PCI, PCI index, serving cell index, arbitrary cell identifier, ID, configuration identification information, or TCI state ID associated with the corresponding cell), handover information (reconfigurationWithSync), the candidate/target cell UE identifier (newUE-Identity/C-RNTI), the timer (e.g., t304 or new timer) for limiting/controlling LTM time, and SSB-based measurement timing configuration (SMTC) and the SSB periodicity/offset/duration configuration of target cell for candidate/target cell synchronization/measurement.

The timer may perform one or more of the following operations.

The corresponding timer may be started when the LTM operation is executed (e.g., when the cell change/handover is triggered/started/executed/applied based on L1L2 signaling/execution instruction information/TCI state/execution condition/event/related procedure/operation), when the execution condition is met by evaluating the execution condition/event configured in the UE, when a specific procedure/operation (e.g., measurement, event detection, condition satisfaction, TCI state update application, etc.) is performed in the UE according to the L1/L2 signaling reception and the corresponding configuration, or when whole/part of the stored/preconfigured corresponding configuration is applied).

The timer may be stopped when the random access to the candidate/target/SpCell is successfully completed.

The timer may be stopped when the corresponding L3/L2/L1 indication/acknowledgement information (e.g., RRC reconfiguration complete message/RRC reconfiguration message including the corresponding information/MAC-CE/HARQ-ACK/UCI) is received from the corresponding candidate/target/SpCell.

When the corresponding timer expires (for the MCG), an RRC reconfiguration procedure may be initiated.

When the corresponding timer expires (for the MCG), the source cell configuration may be applied.

When the timer expires (for the MCG), connection to the source cell may be attempted.

When the timer expires (for the MCG), the random access to the source cell may be started.

When the timer expires (for the MCG), if the bearer for the LTM operation is configured and the RLF does not occur in the source cell, failure information may be indicated to the source cell/base station.

The typical T304 timer used in an NR-based handover process may be used as the corresponding timer. Alternatively, a new timer distinguished from the typical T304 timer may be configured and used as the corresponding timer.

As another example, when the corresponding L1/L2 signaling is received, data may be transmitted/received through the radio bearer for the corresponding LTM operation.

As another example, the LTM operation may be triggered/started/executed when the execution condition is met by evaluating the execution condition configured by the base station in the UE. And/or when the corresponding L1/L2 signaling is received, if the corresponding execution condition is met, it may be triggered/started/executed. For example, the corresponding execution condition may include one or more of reaching an L1 measurement-based threshold value, detecting an L1 measurement (e.g., L1-RSRP)-based event, meeting an L1 report/CSI report trigger condition, detecting an L3 measurement-based event, presence of a valid candidate/target cell configuration (or stored configuration/pre-configuration), presence of an activated TCI state (candidate/target cell), and a corresponding resource set configuration. The corresponding execution condition/event may be configured in association with one or more of (L3) measurement identifier, L1 measurement identifier (e.g., MeasID), L1 report identifier (e.g., L1/CSI-ReportConfigId), L1 event identifier (e.g., eventID), and L3 event identifier. The corresponding execution condition/event may constitute one or more events among when the measurement associated with the source cell/source RS/target cell/target RS has a better value than the threshold, when the measurement associated with the source cell/source RS/target cell/target RS has a worse value than the threshold, when the measurement associated with the target cell/target RS is better than the measurement associated with the source cell/source RS, when the measurement associated with the target cell/target RS is better than a value obtained by adding/subtracting an offset to/from the measurement associated with the source cell/source RS, and when the measurement associated with the source cell/source RS has a worse value than the threshold and the measurement associated with the target cell/target RS has a better value than the threshold.

### L1/L2 signaling/procedure for L1/L2-based cell change

When the UE is positioned in an overlapping coverage area between the cell/serving cell associated with the source cell/first TRP/first TRP and the cell/non-serving cell associated with the target cell/candidate cell/second TRP/second TRP, the UE may be in a state sufficient to transmit uplink/downlink data not only through the cell/serving cell associated with the source cell/first TRP/first TRP but also through the cell/non-serving cell associated with the target cell/candidate cell/second TRP/second TRP. L1/L2 signaling/event/procedure/operation for instructing/triggering/starting/executing/applying/supporting an LTM operation may be defined. Alternatively, typical L1/L2 signaling (or L1/L2 signaling with enhanced conventional L1/L2 signaling) may be used in association with the LTM configuration to instruct/trigger/start/execute/apply/support the LTM operation. When the UE receives the corresponding signaling (or when a specific procedure/operation (e.g., measurement, event detection, condition satisfaction, application of TCI state update, etc.) is triggered/initiated/executed in the UE according to the relevant configuration), the UE may indicate the corresponding information to the higher layer (e.g., MAC/RLC/RRC). The UE may indicate one or more pieces of information included in/associated with the corresponding signaling/event/procedure/operation to the higher layer. The UE may trigger/initiate/execute/apply the LTM operation in the higher layer. The UE may trigger/initiate/execute/apply cell change according to the stored/preconfigured configuration. The UE may transmit/receive uplink/downlink data by switching uplink/downlink data from the source cell to the candidate/target cell according to the stored/preconfigured configuration.

To associate between the L1/L2 signaling for indicating/supporting the LTM operation and the RRC message including the LTM configuration, one or more of the RRC information elements included in the corresponding RRC message may be included and indicated in the corresponding L1/L2 signaling. For example, the base station may include and indicate one or more information elements included in the LTM configuration in the corresponding L1/L2 signaling. Alternatively, one or more pieces of information of the RRC information elements included in the RRC message for the L1/L2 signaling/event/procedure/operation and the LTM operation may be implicitly associated with each other. Thus the UE may recognize the information. For example, the LTM operation may be associated through the corresponding L1/L2 signaling/event/procedure/operation by including each piece of detailed configuration information (e.g., the LTM candidate/target cell configuration, the LTM radio bearer configuration, the L1L2 signaling configuration for the LTM operation, the execution instruction information configuration for the LTM operation, the TCI state configuration for the LTM operation, and the execution condition/event configuration for the LTM operation) included in the LTM configuration.

For example, any detailed configuration information (e.g., the LTM candidate/target cell configuration, the LTM radio bearer configuration, the L1L2 signaling configuration for the LTM operation, the execution instruction information configuration for the LTM operation, the TCI state configuration for the LTM operation, and the execution condition/event configuration for the LTM operation) included in the LTM configuration may include a TCI state ID for triggering/initiating/applying/executing the LTM operation. The UE configured with the corresponding function may trigger/initiate/apply/perform the LTM operation when receiving the corresponding TCI state ID through L1/L2 signaling (e.g., MAC-CE/DCI).

As another example, the UE may associate them by including the physical cell identity (PCI)/PCI index/serving cell index/any cell identity/ID/configuration identification information/TCI state ID included in the received LTM configuration (e.g., candidate/target cell configuration information) in the L1/L2 signaling/event/operation.

As another example, the physical cell identity (PCI)/PCI index/index/any cell identity/ID/configuration identification information/TCI state ID included in the LTM candidate/target cell configuration information may be included in one or more configurations among the L1L2 signaling configuration for the LTM operation, the execution instruction information for the LTM operation, the TCI state configuration for the LTM operation, the execution condition/event configuration for the LTM operation, so that the LTM operation preconfigured/stored in the UE may be triggered/initiated/applied/performed when receiving/detecting the corresponding signaling/execution instruction information/TCI state/execution condition/event.

As another example, as the corresponding L1/L2 signaling/event/procedure/operation, one or more events/procedures/operations, among TCI state activation/update/instruction through MAC CE and/or DCI, TCI state activation/update/instruction using the reference signal (or associated with the reference signal) of the source cell/first TRP/cell associated with the first cell configured for the target cell/candidate cell/second TRP/cell associated with the second TRP, TCI state activation/update/instruction using the reference signal (or associated with the reference signal) of the target cell/candidate cell/second TRP/cell associated with the second TRP configured for the source cell/first TRP/cell associated with the first TRP/serving cell, TCI state activation/update/instruction using the reference signal (or associated with the reference signal) of the target cell/candidate cell/second TRP/cell associated with the second TRP configured for the LTM operation, the L1 measurement result associated with the reference signal, L1 measurement-based event/execution condition detection, L1/CSI reporting, L1/CSI reporting criterion/threshold satisfaction, the timer for limiting/controlling the LTM operation time being operated (e.g., before the timer expires), the L3 measurement result (of/received from the higher layer), and L3 measurement-based event/execution condition satisfaction, may be used individually or in any combination thereof.

For example, the cell change may be triggered/initiated/executed when the corresponding L1/L2 signaling is received, when all corresponding events/execution conditions/criteria/thresholds predefined/configured/stored in the UE are met/detected. As another example, the cell change may be triggered/initiated/executed when the activated TCI state indicated through the MAC CE and/or DCI is associated with one target cell/candidate cell/second TRP/cell associated with the second TRP/non-serving cell. As another example, the cell change may be triggered/initiated/executed when all activated TCI states indicated through the MAC CE and/or DCI are associated with one target cell/candidate cell/second TRP/cell associated with the second TRP/non-serving cell.

For cells having different PCIs, to activate/update/indicate the TCI state based on the source/serving cell reference signal (and/or to activate/update/indicate the TCI state based on the target/candidate cell reference signal), the base station may configure the TCI state for the cell(s)/CC(s) (associated with different PCIs for the LTM operation associated with intra CU) in the UE. For example, the corresponding cell/CC may be configured as a secondary cell to the serving cell configuration and may be distinguished through the serving cell index. Alternatively, the corresponding cell/CC may be distinguished by defining/allocating a cell index/identity/ID/TCI state ID for distinguishing in the serving cell configuration (configured as the target cell/candidate cell/second TRP/cell associated with the second TRP/non-serving cell). Alternatively, the corresponding cell/CC may be configured as the serving cell in the target cell configuration (e.g., an LTM RRC message including reconfiguration with sync or LTM configuration) and be distinguished through the serving cell index for distinguishing the same. Alternatively, the corresponding cell/CC may be distinguished by defining/allocating a cell index/identity/ID/TCI state ID for distinguishing the same in the target cell configuration (e.g., an LTM RRC message including reconfiguration with sync or LTM configuration). Alternatively, the corresponding cell/CC may be distinguished through a PCI/PCI index for distinguishing the corresponding cell in the corresponding UE. Alternatively, the source/serving cell and the target/candidate cell for the LTM operation in the corresponding UE may be included in one cell group. Alternatively, the source/serving cell and the target/candidate cell for the LTM operation in the corresponding UE may be included in different cell groups. For example, (in the intra CU, inter DU scenario) the source/serving cell may be included in the MCG and the target/candidate cell may be included in the SCG.

To update the (intra-cell) TCI state based on the reference signal of the corresponding cell in the corresponding cell in the target cell (when initiating/executing/applying/completing the LTM operation), the base station may configure the corresponding TCI state in the UE. To update the (inter-cell) TCI state based on the reference signal of the target cell for the neighboring cell/CC of the target cell (for the LTM operation associated with the intra CU) (when initiating/executing/applying/completing the LTM operation), the base station may configure the corresponding TCI state in the UE. To update the (inter-cell) TCI state based on the reference signal of the (previous) source cell (when initiating/executing/applying/completing the LTM operation), the base station may configure the corresponding TCI state in the UE. The UE may configure the TCI state for the target cell/candidate cell/cell/second TRP/cell associated with the second TRP/non-serving cell in the UE. The TCI state associated with the pre-handover serving cell (or a cell different from the corresponding cell, pre-handover source cell/first TRP/cell associated with the first TRP) that the UE is to use in the corresponding (target cell/candidate cell/second TRP/cell associated with the second TRP) completing the LTM operation (when initiating/executing/applying/completing the LTM operation) may be configured in the UE. The TCI state associated with the corresponding cell in the corresponding cell (target cell/candidate cell/second TRP/cell associated with the second TRP) where the UE completes the LTM operation (when initiating/executing/applying/completing the LTM operation) may be configured in the UE.

The L1/CSI reporting configuration for the reference signal of the source cell/first TRP/cell associated with the first TRP/serving cell, and the TCI state associated with the corresponding reference signal may be indicated to the UE. The L1/CSI reporting configuration for the reference signal of the target cell/candidate cell/second TRP/cell associated with the second TRP/non-serving cell and the TCI state associated with the corresponding reference signal may be indicated to the UE. The TCI may include a physical cell identity (PCI)/physical cell Id (PCI)/PCI index/associated TRP identification information/TCI state ID.

The SSBs of the source cell/first TRP/cell associated with the first TRP/serving cell may be used as the QCL source of the target cell/candidate cell/second TRP/cell associated with the second TRP/non-serving cell. The CSI-RS resource of the source cell/first TRP/cell associated with the first TRP/serving cell may be allowed as the QCL source pointing at one SSB so that the corresponding CSI-RS may be used as the QCL source of the target cell/candidate cell/second TRP/cell associated with the second TRP/non-serving cell. The SSBs of the target cell/candidate cell/second TRP/cell associated with the second TRP/non-serving cell may be used as the QCL source of the source cell/first TRP/cell associated with the first TRP/serving cell. The CSI-RS resource of the target cell/candidate cell/second TRP/cell associated with the second TRP/non-serving cell may be allowed as the QCL source pointing at one SSB so that the CSI-RS may be used as the QCL source of the source cell/first TRP/cell associated with the first TRP/serving cell. The TCI state included in the corresponding configuration for one cell may be associated with a cell having a different PCI from the corresponding cell through the QCL information/QCL source.

For the (L1) measurement for the target cell/candidate cell/second TRP/cell associated with the second TRP/non-serving cell, the PCI/PCI index/serving cell index/any cell identity/ID/configuration identification information/TCI state ID/associated TRP identification information for distinguishing the target cell/candidate cell/second TRP/cell associated with the second TRP/non-serving cell may be included in the reference resource set configuration (e.g., CSI-MeasConfig/CSI-SSB-ResourceSet) and/or associated trigger/report configuration (e.g., CSI-AperiodicTriggerState, CSI-AssociatedReportConfigInfo) included in the serving cell configuration (ServingCellConfig). Thus, it is possible to instruct/configure to perform L1-RSRP measurement/L1 reporting/CSI reporting for the target cell/candidate cell/second TRP/cell associated with the second TRP/non-serving cell. Or, for the target cell/candidate cell/second TRP/cell associated with the second TRP/non-serving cell, the reference resource set for the corresponding cell and the configuration for L1 measurement/report associated with the reference resource set for the corresponding cell may be indicated to the UE. The corresponding configuration may include the PCI/PCI index/serving cell index/any cell identity/ID/configuration identification information/TCI state ID/associated TRP identification information for distinguishing the corresponding cell in the corresponding reference resource set configuration (e.g., CSI-MeasConfig/CSI-SSB-ResourceSet) and/or associated trigger/report configuration (e.g., CSI-AperiodicTriggerState, CSI-AssociatedReportConfigInfo).

To update the TCI state to indicate/trigger/initiate/associate/support the LTM operation, the TCI state/state pool may be configured for each cell or for each BWP through RRC. Or, to update the TCI state to indicate/trigger/initiate/associate/support the LTM operation, the TCI state/state pool may be configured for each cell (as configuration information associated with the cell) through RRC. Or, to update the TCI state to indicate/trigger/initiate/associate/support the LTM operation, the TCI state/state pool may be configured through RRC for each cell group (so that it is used as common information shared by all the cells/CCs/BWPs in the cell group of the corresponding UE, or the TCI state/state pool of one reference/indication cell/CC/BWP is used as the TCI state/state pool of another cell/CC/BWP in the cell group of the corresponding UE). Or, to update the TCI state to indicate/trigger/initiate/associate/support the LTM operation, the TCI state/state pool may be configured through RRC so that the TCI state/state pool is used as common information shared by all the cells/CCs/BWPs in the corresponding UE (or by the cells/CCs/BWPs configured as a specific group in the UE), or the TCI state/state pool of one reference/indication cell/CC/BWP is used as the TCI state/state pool of another cell/CC/BWP in the corresponding UE.

Here, the cell group may represent a subset of serving cells constituted of the PCell/PSCell and zero or one or more secondary cells like the MCG/SCG. Or, the cell group may represent a subset of cells that may be constituted of the PCell/PSCell, zero or one or more secondary cells, zero or one or more secondary cells. Or, the cell group may represent a subset of cells constituted of the source cell and the target cell/candidate cell. Or, the cell group may represent a subset of cells associated with the first TRP and cells associated with the second TRP. Or, the cell group may represent a subset of cells including one or more among cells that may be constituted of the PCell/PSCell and zero or one or more secondary cells, zero or one or more secondary cells, zero or one or more serving cells/cells associated with the first TRP, zero or one or more non-serving cells/cells associated with the second TRP. Or, the cell group may represent a group constituted of one or more cells configured in one UE by being indicated by the base station.

The TCI state may include separate DL/UL TCI. One downlink TCI state and one uplink TCI state may be indicated through individual state IDs. One downlink TCI state may be indicated by one downlink TCI state ID. One uplink TCI state may be indicated by one uplink TCI state ID. TCI state IDs divided for the downlink and uplink, respectively, may be configured. Alternatively, one downlink TCI state ID may be associated with one common/joint TCI state ID. One uplink TCI state ID may be associated with one common/joint TCI state ID. One downlink TCI state ID and one uplink TCI state ID pair may be associated with one common/joint TCI state ID.

The TCI state may include joint DL/UL TCI. One downlink TCI state configuration and one uplink TCI state configuration may be combined to be indicated through one (common/joint) TCI state ID. A pair of one downlink TCI state and one uplink TCI state may be combined to be indicated/configured through one (common/joint) TCI state ID. A pair of one downlink TCI state ID and one uplink TCI state ID may be individually associated with one common TCI state ID. Information for distinguishing whether the corresponding TCI state ID is DL, UL, or Joint may be configured. Alternatively, MAC CE and/or DCI signaling indicating/triggering/initiating/associating the LTM operation may be limited to the case including the joint TCI state ID. The separate DL/UL TCI may share the TCI state pool with the joint DL/UL TCI. Each TCI state may be associated with the physical cell Id (PCI)/PCI index/TRP (first TRP) of the corresponding serving cell or may be associated with the PCI/PCI index/TRP (second TRP) of a cell other than the corresponding serving cell. The PCI index may indicate the index/identity for identifying PCI within the PCI set configured in the UE for the LTM operation (or inter-cell beam management). The PCI index may be configured with a bit value less than PCI. For example, in RRC, PCI may have an integer value from 0 to 1007, and 10 bits may be required for this. If the maximum number of cells that may be preconfigured for the LTM operation is 4 or 8, the corresponding cell may be indicated through a PCI index of 2 or 3 bits.

The RRC configuration for the TCI state/state pool used to update the TCI state for indicating/triggering/starting/associating/supporting the LTM operation may be indicated to the UE using the source cell/first TRP/cell associated with the first TRP as PCell/SpCell. The corresponding configuration may include information for distinguishing the target cell/candidate cell/second TRP/cell associated with the second TRP. When the cell change from the source cell/first TRP/cell associated with the first TRP to the target cell/candidate cell/second TRP/cell associated with the second TRP is indicated to the UE according to the L1/L2 signaling/event/procedure/operation, the UE may trigger/initiate/execute/apply the LTM operation.

Alternatively, the RRC configuration for the TCI state/state pool used to update the TCI state for indicating/triggering/starting/associating/supporting the LTM operation may be indicated to the UE using the target cell/candidate cell/second TRP/cell associated with the second TRP as PCell/SpCell. When the cell change from the source cell/first TRP/cell associated with the first TRP to the target cell/candidate cell/second TRP/cell associated with the second TRP is indicated to the UE according to L1/L2 signaling/event/procedure/operation, the UE may trigger/initiate/execute/apply the LTM operation.

The TCI state/state pool configuration of the source cell/first TRP/cell associated with the first TRP and the TCI state/state pool configuration (or some configurations) of the target cell/candidate cell/second TRP/cell associated with the second TRP may be indicated/applied/configured to the UE with the same configuration/configuration parameter value. Alternatively, the TCI state/state pool configuration of the source cell/first TRP/cell associated with the first TRP may be used/replaced/indicated as a reference with the TCI state/state pool configuration of the target cell/candidate cell/second TRP/cell associated with the second TRP. For example, when there is no TCI state/state pool configuration for the target cell/candidate cell/second TRP/cell associated with the second TRP, the corresponding configuration may be replaced with the TCI state/state pool configuration for the target cell/candidate cell/second TRP/cell associated with the second TRP based on/with reference to the TCI state/state pool configuration of the source cell/first TRP/cell associated with the first TRP.

Alternatively, the TCI state/state pool configuration of the target cell/candidate cell/second TRP/cell associated with the second TRP may be used/replaced/referenced with the TCI state/state pool configuration of the source cell/first TRP/cell associated with the first TRP. For example, when there is no TCI state/state pool configuration for the source cell/first TRP/cell associated with the first TRP, the target cell/candidate cell/second TRP/second TRP may be replaced with the TCI state/state pool configuration for the source cell/first TRP/cell associated with the first TRP with reference to the TCI state/state pool configuration of the cell.

Alternatively, the TCI state/state pool configuration of a specific serving cell may be used/replaced/referenced with the TCI state/state pool configuration of the cell having PCI different from the corresponding cell. For example, when there is no TCI state/state pool configuration for one cell, the corresponding configuration may be replaced with the TCI state/state pool configuration for the corresponding cell with reference to the TCI state/state pool configuration of the cell having PCI different from the corresponding cell.

Meanwhile, L1-RSRP reporting/CSI reporting/L1 reporting may be transmitted to the base station. L1-RSRP may be calculated and reported for each PCI/PCI index/TRP. For example, the number of bits may be reduced (e.g., 4 bits) using a (relative) difference value for a PCI/PCI index/TRP specific reference (7 bits) L1-RSRP value. As another example, the corresponding reporting may include PCI/PCI index/serving cell index/any cell ID/configuration identification information/TCI state ID. Alternatively, L1-RSRP may be calculated and reported without distinguishing PCI/PCI index/TRP. For example, the number of bits may be reduced (e.g., 4 bits) using a difference value with respect (relative) to the reference (7 bits) L1-RSRP value. One or more L1-RSRP measurement values may be indicated to the base station through one L1-RSRP reporting.

A resource set (e.g., CSI-SSB-ResourceSet) for L1-RSRP measurement/reporting may be configured in the UE. The corresponding resource set may include one set of SSB indices. The SSB may be associated with the PCI/PCI index/TRP of the corresponding serving cell or may be associated with the PCI/PCI index/TRP of a cell other than the corresponding serving cell.

To support the LTM operation, the CSI reporting/L1-RSRP reporting/L1 reporting/LTM trigger operation may be performed based on the execution condition/event/criterion/threshold value. An event for this may be defined and configured in the UE by the base station. The corresponding reporting may include one or more pieces of information among the event name, event identification information, event index, TCI state indication information, TCI state ID, and PCI/PCI index/serving cell index/any cell ID/configuration identification information.

TCI state update/activation/instruction for indicating/triggering/associating the LTM operation may be provided through MAC CE and/or DCI. The MAC CE may indicate one or more TCI states to be activated in the TCI state pool configured by the RRC. If a plurality of TCI states are activated, the DCI may select/indicate one of the activated states (through a codepoint/TCI field associated with the TCI state). If one TCI state is activated, an implicitly activated TCI state may be selected without additional DCI indication. As another example, if a plurality of TCI states are activated and all of the corresponding TCI states are associated with one target/candidate cell, a TCI state corresponding to the order indicated by the first/last/low/high/RRC may be selected.

The number of code points activated via the MAC CE-based TCI state update/activation/indication for indicating/triggering/associating/supporting the LTM operation may be one or more (e.g., 8). The number of codepoints in the TCI field for DCI-based beam indication/TCI state update/TCI state activation for indicating/triggering/associating/supporting the LTM operation may be one or more. The corresponding number may be set to differ based on UE capability.

The number of PCIs, different from those of the serving cell associated with the activated TCI state for the MAC CE-based TCI state activation indications for indicating/triggering/associating/supporting the LTM operation and/or the DCI-based beam indication/TCI state update/TCI state activation may be set to differ based on the UE capability. Furthermore, there may be one or more PCIs different from the serving cell associated with the activated TCI state for MAC CE-based TCI state activation indication and/or DCI-based beam indication/TCI state update/TCI state activation.

A MAC CE may be defined to indicate/trigger/link/support the LTM operation. The corresponding MAC CE may include one or more the following information pieces: serving cell ID, serving cell BWP ID, serving cell SUL, candidate/target cell ID/PCI/PCI index, target cell BWP ID, target cell SUL, candidate/target cell configuration identification information, whether serving/target cell, beam/cell change application time, CSI-RS resource/resource set ID, SRS resource/resource set ID, TCI state, PCI/PCI index, extension field, CORESET pool ID, CORESET ID, PUCCH resource/resource set ID, whether temporary RS trigger for LTM operation, triggering time offset of the corresponding/associated RS, resource used for the corresponding/associated RS, QCL source for the corresponding/associated RS, the number of the corresponding/associated RS bursts, RRC configuration/configuration information including parameters (e.g., one or more of the above-described parameters) for the corresponding/associated RS, C-RNTI, UL grant, timing advance command, and RACH-only configuration information.

Here, the serving cell ID indicates/represents the serving cell identity to which the MAC CE (or any field included in the MAC CE) is applied. The candidate/target cell ID/PCI/PCI index may indicate the cell identity/PCI/PCI index of the target/handover cell where cell change is performed according to the LTM operation. The BWP ID is the codepoint of the DCI bandwidth part indicator field and indicates the DL BWP to which the MAC CE (or any field included in the MAC CE) is applied. The SUL indicates/denotes whether the MAC CE (or any field included in the MAC CE) is applied to the NUL carrier or the SUL carrier (it is set to 1 for the SUL carrier configuration and to 0 for the NUL carrier configuration).

The candidate/target cell configuration identification information indicates/specifies information for associating the configuration (or the corresponding detailed configuration, or the candidate/target cell configuration) for the LTM operation included in the corresponding RRC message. Whether serving/target cell is information indicating whether any information field included in the MAC CE is associated/included/corresponds to the serving cell or associated/included/corresponds to the target cell and may be indicated by 1 bit (1/0). The beam application time is the time when the corresponding beam/TCI state is applied, and the value indicated/configured by the base station may be used. Alternatively, the cell change application time is the time when the corresponding cell change is applied, and the value indicated/configured by the base station may be used. The CSI-RS resource/resource set ID indicates the index of the NZP-CSI-RS-ResourceSet including Semi Persistent NZP CSI-RS resources, or the resource identity used to induce/associate the corresponding TCI state. The SRS resource/resource set ID indicates the (semi-persistent) SRS resource set identity identified through the SRS resource set identity, or the resource identity used to induce/associate the corresponding TCI state.

The TCI state may include a TCI state ID to be activated. Alternatively, the TCI state may include the TCI state ID (TCI-StateId) in the TCI state used (or applicable) (to be activated) as the QCL source for resources in the corresponding CSI-RS resource set/SRS resource set/control resource set. Furthermore, the TCI state may indicate the active/inactive state of the TCI state having the TCI state ID i. The TCI state may be configured as a bitmap indicating the active/inactive state for each configured TCI state ID. For example, when the corresponding field is set to 1/0 (or 0/1), the TCI state having the TCI state identity i may be activated/deactivated. The activated TCI state identity may be mapped to the codepoint on the field (e.g., Transmission Configuration Indication) included in the DCI. The codepoint to which the TCI state is mapped may be determined by the ordinal position among all TCI states/TCI state IDs having the activated TCI state in the corresponding bitmap. The TCI state may indicate the common/joint DL/UL TCI state ID. Alternatively, the TCI state may be configured with a downlink TCI state ID field and an uplink TCI state ID field to indicate separate DL/UL TCI. Alternatively, the corresponding MAC CE may include a field indicating whether the corresponding TCI state indicates the joint DL/UL TCI state or the separate DL/UL TCI state. Alternatively, the corresponding MAC CE may use only the joint DL/UL TCI state ID. Alternatively, the TCI state/TCI state ID (e.g., joint DL/UL TCI state, separate DL/UL TCI state, both) for associating to the LTM operation may be indicated to the UE through RRC. If the active/inactive state is indicated through the above-described bitmap, the above-described bitmap may be configured according to the order of the corresponding TCI state/TCI state ID. One TCI state may be used as a QCL source for one or more of PDSCH/PDCCH/PUCCH/PUSCH/CSI-RS resource set/SRS resource set. Each TCI state may include a parameter for configuring the quasi co-location (QCL) relationship between one or more DL/UL reference signals and the DM-RS port of the PDCCH/PDSCH, the CSI-RS port of the CSI-RS resource, the PUCCH/PUSCH spatial relation, and the spatial relation of the SRS resource. The corresponding TCI state may include only the TCI state associated with the second TRP. Alternatively, the corresponding TCI state may include the TCI state associated with both the first TRP and the second TRP. Alternatively, the MAC CE for the LTM operation (to indicate the TCI state associated with the second TRP) may be defined as a MAC CE having a separate LCID. The extension field may indicate the flag for indicating whether the corresponding TCI state is the last TCI state or not. Alternatively, the extension field may indicate the flag for indicating whether there is an octet including the corresponding TCI state ID. It may be distinguished and indicated using a value of 1/0.

The PCI/PCI index may indicate the PCI/PCI index associated with the corresponding TCI state identity. The CORESET Pool ID indicates CORESET pool ID/control resource set identity (ControlResourceSetId) specific to the corresponding TCI state (This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0.).

The CORESET ID indicates the control resource set applicable/available to the corresponding TCI state identified with the control resource set identity (In case the value of the field is 0, the field refers to the control resource set configured by controlResourceSetZero). The PUCCH resource/resource set ID indicates the PUCCH resource identity identified by the PUCCCH resource identity, or the resource identity used to induce/associate the corresponding TCI state. The temporary RS for the LTM operation indicates the temporary RS burst for the LTM operation, and the number of corresponding RS bursts and the candidate value for the triggering offset may be configured as RRC. The C-RNTI indicates the newUE-Identity/C-RNTI to be used in the candidate/target cell. The UL Grant indicates the resource to be used on the uplink in the candidate/target cell. The Timing Advance command indicates the index value used to control the amount of timing adjustment to be applied to the corresponding MAC entity. (The Timing Advance Command field indicates the index value TA used to control the amount of timing adjustment that the MAC entity has to apply in TS 38.213). RACH-only configuration information (rach-ConfigDedicated, e.g., RA occasion for contention free random access, msgA-PUSCH-Resource-Index, ra-PreambleIndex, SSB-index, etc.) indicates random access configuration information used for cell change.

Here, one or more pieces of information, such as CSI-RS resource/resource set ID, SRS resource/resource set ID, DL/UL TCI state, PCI/PCI index, CORESET pool ID, CORESET ID, PUCCH resource/resource set ID, whether temporary RS trigger for LTM operation, triggering time offset of the corresponding RS, resource used for the corresponding RS, QCL source for the corresponding RS, number of the corresponding RS bursts, and parameter for the corresponding RS may be divided into information included in the source cell configuration and/or information included in the target cell configuration and included in the respective fields. Alternatively, only the/associated information included in the source cell configuration may be included. Alternatively, only the/associated information included in the target cell configuration may be included.

The corresponding MAC CE may be split into i) a MAC CE for indicating joint DL/UL TCI activation/deactivation and ii) a MAC CE for indicating separate DL/UL TCI activation/deactivation and may be defined with separate LCIDs. Alternatively, the corresponding MAC CE may be defined as a MAC CE having one LCID capable of supporting both joint DL/UL TCI activation/deactivation and separate DL/UL TCI activation/deactivation. In the corresponding MAC CE, the MAC CE for indicating the temporary RS for the LTM operation may be defined with a separate LCID and may be indicated to the UE together with the above-described MAC CEs.

By using MAC CE and/or DCI, TCI state ID update/activation for providing QCL information for PDCCH/PDSCH/CSI-RS dedicated to the UE and/or uplink TX spatial filter(s) for PUSCH/PUCCH/SRS dedicated to the UE may be provided/indicated across the source cell/first TRP/cell associated with the first TRP/serving cell and the target cell/candidate cell/second TRP/cell associated with the second TRP/non-serving cell configured in the UE.

The base station may transmit the TCI state activation/deactivation MAC CE and/or DCI to the UE to indicate/trigger/initiate/support the LTM operation. The base station may activate/deactivate the configured TCI state for (UE-specific/Non-UE-specific) PDSCH/PDCCH/PUCCH/PUSCH/CSI-RS resource set/SRS resource set (for PDSCH/PDCCH reception) of a cell (or target cell) having PCI different from PCI of the serving cell through the second TRP. The base station may activate/deactivate the configured TCI state for the code point of the DCI transmission configuration indication field for the PDSCH/PDCCH/PUCCH/PUSCH/CSI-RS resource set/SRS resource set (for PDSCH/PDCCH reception) of the cell (or target cell) having PCI different from PCI of the serving cell through the second TRP. The configured TCI for PDSCH/PDCCH/PUCCH/PUSCH/CSI-RS resource set/SRS resource set is initially deactivated when receiving the RRC reconfiguration message. When performing the LTM operation, the configured TCI for the PDSCH/PDCCH/PUCCH/PUSCH/CSI-RS resource set/SRS resource set may perform cell change/handover in an activated state. Therefore, after the LTM operation, the configured TCI for the PDSCH/PDCCH/PUCCH/PUSCH/CSI-RS resource set/SRS resource set may be activated. Alternatively, the activated state may be maintained during the handover. Alternatively, the activated state may be maintained while the indicated timer is operated. Alternatively, the activated state may be maintained until explicit signaling (e.g., L3/L2/L1 indication/acknowledgement information) defined by the base station is indicated/received. Alternatively, the activated state may be maintained until a specific time point included in the disclosure.

The base station may indicate to update/activate the TCI state ID through the MAC CE and/or DCI. When the UE (MAC entity) receives the corresponding MAC CE through the serving cell/first TRP, the UE may indicate information about the corresponding MAC CE to a lower/physical layer. The UE may map the activated TCI state received through the received TCI state update/activation MAC CE/indication/instruction to the codepoint of the corresponding field (e.g., 'Transmission Configuration Indication' or any field defined for the LTM operation) included in the DCI. The UE may apply the TCI state corresponding to the codepoint/value of the corresponding field included in the DCI. The UE may apply the received TCI state ID. When the UE transmits the PUCCH having the HARQ ACK information corresponding to the PDSCH carrying the corresponding activation MAC CE/indication/instruction in slot n, the mapping between the TCI state and the codepoint of the corresponding field included in the DCI may be applied in a specific application time calculated using the parameter indicated by the base station after the corresponding slot n. The UE may apply the corresponding TCI state in the corresponding application time.

The UE may trigger/initiate/execute/apply the LTM operation. For example, the LTM operation may be triggered/initiated/executed/applied at the corresponding application time (or after the application time, or after the additional time/offset indicated/configured by the base station). The UE may indicate the LTM operation to the higher layer (e.g., RRC). The lower layer PHY/MAC of the UE may transfer the corresponding information to the MAC/RLC/PDCP/RRC. The higher layer of the UE may trigger/initiate/execute/apply a cell change.

Hereinafter, embodiments of CU-DU signaling and radio bearer configuration for Ll/L2-based cell change (LTM operation) will be further described.

NR provides a split structure that splits a base station (gNB) into a central unit (hereinafter, referred to as gNB-CU for convenience of description) and a distributed unit (hereinafter, referred to as gNB-DU for convenience of description) to support efficient network construction. The radio network is constituted of one set of base stations connected to the 5G core network (5GC) through the NG interface. The base stations are connected to each other through the Xn interface. One base station may be constituted of one gNB-CU and one or more gNB-DUs. The gNB-CU and the gNB-DU are connected to each other through the F1 interface. One gNB-DU may be connected to only one gNB-CU. The NG interface and the Xn-C interface for one base station constituted of the gNB-CU and the gNB-DU are terminated at the gNB-CU. The gNB-DUs connected with the gNB-CU are shown as only one base station to other base stations and the 5GC. The gNB-CU is a logical node hosting the RRC, SDAP and PDCP protocols of the base station. The gNB-DU is a logical node hosting the RLC, MAC and PHY layer of the base station. One gNB-DU supports one or more cells. One cell is supported by only one gNB-DU.

For example, the LTM operation determination may be performed by the CU. For example, the CU may determine the LTM operation based on the RRM measurement or the like. When the LTM operation is determined in the CU, the CU may transmit an FlAP message indicating the LTM operation to the DU. The message may include one or more pieces of information included in the disclosure. The DU may indicate L1/L2 signaling for the LTM operation to the UE. The DU may transmit a reference signal associated with L1/L2 signaling.

As another example, the LTM operation determination may be performed by the DU. For example, the DU may determine the LTM operation based on L1 reporting (e.g., CSI report). The DU may indicate L1/L2 signaling for the LTM operation to the UE. The DU may transmit a reference signal associated with L1/L2 signaling. The DU may transmit an FlAP message to the CU to notify the CU that L1/L2 signaling for the LTM operation is indicated to the UE. The message may include one or more pieces of information included in the disclosure. When the CU receives the corresponding message, the RRC/PDCP of the CU may perform one or more operations according to the disclosure.

When cell change/handover is triggered/initiated/executed/applied based on L1L2 signaling/execution indication information/TCI state/execution condition/event/related procedure/operation, when the execution condition is met by evaluating the execution condition/event configured in the UE, or when a specific procedure/operation (e.g., measurement, event detection, condition satisfaction, application of TCI state update, etc.) is performed in the UE according to L1/L2 signaling reception and the corresponding configuration, some or all of the configurations (or candidate/target cell configurations stored/preconfigured in the UE) included in the corresponding RRC reconfiguration message may be applied.

When the cell change/handover is triggered/initiated/executed/applied based on the L1L2 signaling/execution indication information/TCI state/execution condition/event/related procedure/operation, when the execution condition is met by evaluating the execution condition/event configured in the UE, or when the L1/L2 signaling is received and a specific procedure/operation (e.g., measurement, event detection, condition satisfaction, application of TCI state update, etc.) is performed in the UE according to the corresponding configuration, data may be transmitted/received through the radio bearer for the corresponding LTM operation. For example, the UE may switch uplink/downlink data from the source cell to the candidate/target cell to transmit/receive the uplink/downlink data. As another example, uplink/downlink data may be switched from the L2 entity associated with the source cell to the L2 entity associated with the candidate/target cell to be transmitted/received.

The radio bearer for the LTM operation may be applied/configured/stored in the UE when the base station indicates the LTM configuration to the UE through RRC signaling. Alternatively, the radio bearer for the LTM operation may be applied/configured to the UE (according to the stored configuration) when receiving the corresponding L1/L2 signaling.

For example, as the radio bearer for the LTM operation, the same radio bearer structure as a general data radio bearer (DRB) or a signaling radio bearer (SRB) to which one PDCP entity, one RLC entity, and one MAC entity are associated may be used. As another example, the radio bearer for the LTM operation may be configured by adding an advanced function to the L1/L2 entity included/associated with the general data radio bearer/signaling radio bearer structure. For example, the UE may reconstruct, set, and maintain the radio bearer used in the source cell and the L1/L2 entity (one PDCP entity, one RLC entity, and one MAC entity) associated with the corresponding radio bearer in the target cell with the same configuration and/or continuously maintained PDCP/RLC/MAC state variables/buffer/timer/parameter values for one or more parameters (or for all the parameters). For example, the source cell may use the value stored in the corresponding PDCP entity as the initial value without setting 0 as the initial value for the corresponding state variables (e.g., TX_NEXT, RX_NEXT, RX_DELIV, and RX_REOR) for the corresponding radio bearer. For convenience of description, only PDCP state variables are described, but this is only for convenience of description, and it is obvious that any RLC state variable and any MAC parameter are also included in the scope of the disclosure.

As another example, the radio bearer for the LTM operation may include one or more of the radio bearers (e.g., DRB and SRB) described below for fast switching. An LTM radio bearer denotes any radio bearer used in the process of the LTM operation included in the disclosure. This is only for convenience of description, and it may indicate any radio bearer configured in the UE when performing the LTM operation. The radio bearer may be provided through one type/L2 structure, or one or more types/L2 structures may be defined and provided according to a corresponding scenario.

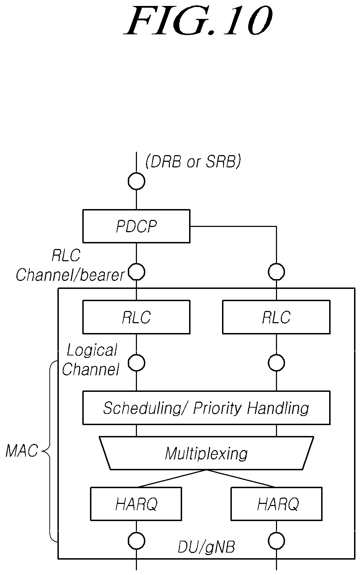

FIG. 10 is a view illustrating an example of a downlink L2 structure for an LTM radio bearer.

Referring to FIG. 10, an LTM radio bearer may have a split structure where one PDCP entity has two RLC entities (AM/UM) (one PDCP entity is associated with two RLC entities). Each RLC entity may be associated with one MAC entity. For example, the L1/L2-based cell change may be performed between cells associated with the corresponding DU in the intra-DU/gNB/gNB-DU connected to the corresponding CU in the intra-CU/gNB-CU (intra-CU/gNB-CU).

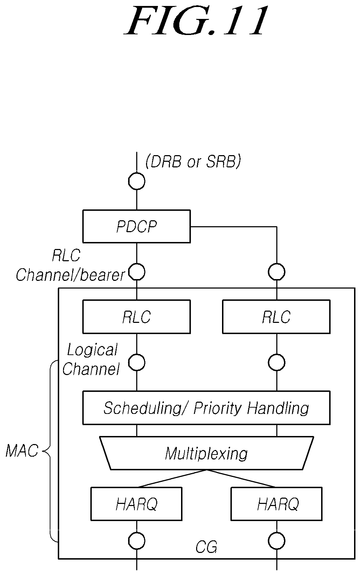

FIG. 11 is a view illustrating an example of an uplink L2 structure for an LTM radio bearer.

Referring to FIG. 11, an LTM radio bearer having a split structure where one PDCP entity has two RLC entities (AM/UM) (one PDCP entity is associated with two RLC entities) in one cell group (e.g., MCG) may be configured in the UE. Each RLC entity may be associated with a single MAC entity.

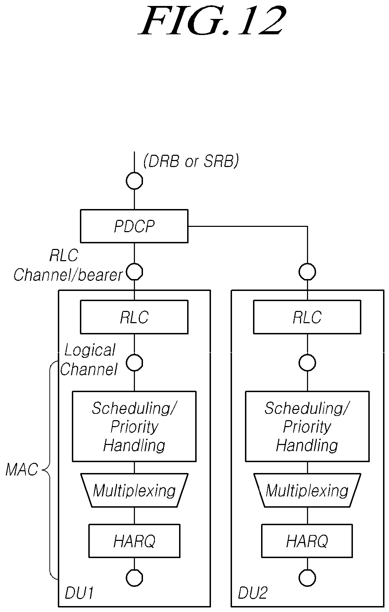

FIG. 12 is a view illustrating another example of a downlink L2 structure for an LTM radio bearer.

Referring to FIG. 12, an LTM radio bearer may have a split structure where one PDCP entity has two RLC entities (AM/UM) (one PDCP entity is associated with two RLC entities). Each RLC entity may be associated with each MAC entity. For example, an intra-CU inter-DU L1/L2-based cell change may be performed between cells associated with the respective DUs for different DUs connected to the corresponding CU in the intra-CU.

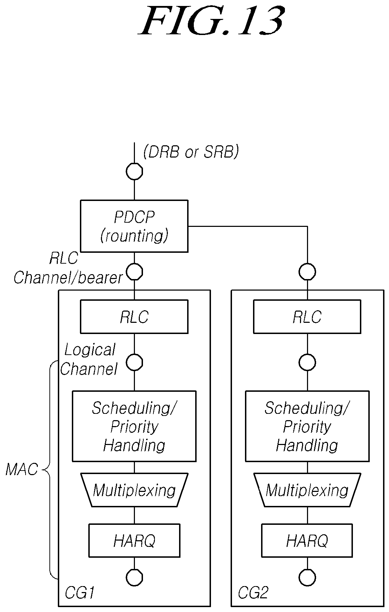

FIG. 13 is a view illustrating another example of an uplink L2 structure for an LTM radio bearer.

Referring to FIG. 13, an LTM radio bearer having a split structure where one PDCP entity has two RLC entities (AM/UM) (one PDCP entity is associated with two RLC entities) in one cell group (e.g., MCG) may be configured in the UE. Each RLC entity may be associated with each MAC entity associated with each cell group (e.g., MCG or SCG).

The LTM operation configuration through RRC signaling may include one or more candidate/target cell configurations. When one or more candidate cells are provided, an additional L2 entity for supporting the corresponding candidate cell may be configured in association.

For example, when two candidate cells are provided in the structure of FIG. 10 and/or FIG. 11, there may be three RLC entities associated with one PDCP entity. When the handover to a specific candidate/target cell is successfully completed, the remaining RLC entities may be released. Alternatively, when the handover to the specific candidate/target cell is successfully completed, the remaining RLC entities may be maintained. Accordingly, the L1/L2-based cell change may be triggered/initiated/applied/performed until the release of the corresponding candidate cell is indicated through RRC signaling. As another example, when two candidate cells are provided in the structure of FIG. 12 and/or FIG. 13, there may be three RLC entities associated with one PDCP entity. Each RLC entity may be associated with each MAC entity. When the handover to a specific candidate/target cell is successfully completed, the remaining RLC entity and MAC entity may be released. Alternatively, when the handover to the specific candidate/target cell is successfully completed, the remaining RLC entity and MAC entity may be maintained. Accordingly, the L1/L2-based cell change may be triggered/initiated/applied/performed until the release of the corresponding candidate cell is indicated through RRC signaling.

As another example, when two candidate cells are provided in the structure of FIGS. 10 to 13, the number of activated RLC entities associated with one PDCP entity (used for an LTM operation) may be limited to two. The number of PCIs different from the serving cell associated with the activated TCI state may be limited to one. The number of RLC entities (or RLC entity/MAC entity) associated therewith may be limited to two. When receiving the corresponding L1/L2 signaling, the corresponding L2 entity may be activated/configured/applied/used/set/added.

As another example, the RLC entity (or RLC entity/MAC entity) associated with a cell having a different PCI from the serving cell associated with the inactive TCI state may be configured in an inactive state. When receiving the corresponding L1/L2 signaling, the corresponding L2 entity may be activated/configured/applied/used/set/added.

As described above, the LTM operation configuration indicated through RRC signaling may include one or more pieces of information, such as the LTM candidate/target cell configuration, the LTM radio bearer configuration, the L1L2 signaling configuration for the LTM operation, the execution indication information configuration for the LTM operation, the TCI state configuration for the LTM operation, and the execution condition/event configuration for the LTM operation.

The above-described information may indicate the L1L2 signaling configuration for the LTM operation, the execution indication information configuration for the LTM operation, the TCI state configuration for the LTM operation, the execution condition/event configuration for the LTM operation, and information for triggering/initiating/executing/applying the LTM operation. The configuration may include information for associating the configuration to the LTM candidate/target cell configuration and/or the LTM radio bearer configuration. One LTM candidate/target cell configuration may be configured to be mapped one-to-one with the corresponding configuration. Alternatively, one LTM candidate/target cell configuration may be configured to be mapped one-to-many with one or more corresponding configurations.

When the UE receives a handover command (RRC reconfiguration with sync) that does not include the LTM operation configuration (or for general handover, not for LTM operation) before the cell change/handover is triggered/initiated/executed/applied based on the L1L2 signaling/execution indication information/TCI state/execution condition/event/related procedure/operation, the UE may perform the handover procedure according to the received handover configuration (according to the standard specifications described in Section 38.300 9.2.3.2 of TS) regardless of any LTM operation configuration previously received. When the UE receives the command, when the UE successfully completes the random access procedure in the corresponding cell, when the UE successfully completes the handover, and when the UE sends an RRC reconfiguration complete message to the target cell, the UE may release/remove the stored LTM operation configuration/UE variable.

When the UE receives the RRC reconfiguration message including the LTM operation configuration before the cell change/handover is triggered/initiated/executed/applied based on the L1L2 signaling/execution indication information/TCI state/execution condition/event/related procedure/operation, part or all of the configurations included in the configuration may be replaced/modified/changed/reconfigured/stored/applied. For example, one or more pieces of information among the LTM candidate/target cell configuration, the LTM radio bearer configuration, the L1L2 signaling configuration for the LTM operation, the execution indication information configuration for the LTM operation, the TCI state configuration for the LTM operation, and the execution condition/event configuration for the LTM operation may be changed/modified through information for identifying the corresponding LTM operation configuration (or the detailed configuration included in the corresponding configuration).

When a handover command (RRC reconfiguration with sync) is received before the cell change/handover is triggered/started/executed/applied based on L1L2 signaling/execution indication information/TCI state/execution condition/event/related procedure/operation, the corresponding handover command (or corresponding RRC reconfiguration message) may include the LTM configuration for the LTM operation in the corresponding target cell. The UE may perform the handover procedure according to the received general handover configuration (according to the standard specifications described in Section TS 38.300 9.2.3.2). The UE may release/remove the LTM configuration/UE variable configured/stored in the source cell. The UE may store/apply the LTM operation configuration where the target cell performing the handover is the source cell/first TRP/cell associated with the first TRP/serving cell. Any cell having a PCI different from the corresponding cell is the target cell/candidate cell/second TRP/cell associated with the second TRP/non-serving cell. The cell change and the LTM operation configuration in the changed cell may be stored/applied through one RRC signaling message.

The main scenario of the L1/L2-based LTM operation includes cell change in the intra CU. In this case, the logical nodes hosting the RRC/SDAP/PDCP protocol of the base station are the same. Further, the MAC entity of the base station is the same in the intra DU cell change scenario. When the L1/L2 signaling-based LTM operation is performed in the intra CU (Intra DU), it may be possible to transmit and receive data in the target cell by using/maintaining/reconfiguring the source cell configuration (or the part of the corresponding configuration).

For example, in the source cell group, it is possible to perform cell change while using/maintaining one or more of the cell group configuration and/or the radio bearer configuration configured/applied (similar to the SCell change). In the source cell group, it is possible to perform cell change without performing one or more of security key refresh/change, random access to the target cell/PCell, MAC reset, RLC reset, and PDCP reset/data recovery (similar to SCell change). As another example, the UE may transmit and receive data in the target cell through the corresponding L2 entity (e.g., MAC/RLC/PDCP/SDAP) without changing the source cell configuration (or part of the corresponding configuration).

As another example, data may be transmitted/received in the target cell using the same configuration as the source cell based on the TCI state activated in the source cell. According to the LTM radio bearer type, when performing cell change from the source cell/first TRP/first TRP-associated cell/serving cell to the target cell/candidate cell/second TRP/second TRP-associated cell/non-serving cell, the MAC procedure may be performed without the MAC reset (or without performing all operations through reset on the MAC entity but, if necessary, by defining only the corresponding operation).

As another example, the MAC entity may be reconfigured/set/maintained to have the same configuration in the source cell/first TRP/first TRP-associated cell/serving cell and the target cell/candidate cell/second TRP/second TRP-associated cell/non-serving cell according to the type of the radio bearer for the LTM operation. Alternatively, the specific operation/parameter used/applied in the source cell/first TRP/first TRP-associated cell/serving cell may be continuously maintained in the target cell/candidate cell/second TRP/second TRP-associated cell/non-serving cell (although some operations related to MAC reset are performed). Alternatively, only some of the following MAC reset-related operations associated with the source cell/first TRP/first TRP-associated cell/serving cell may be performed. For example, one or more of the following MAC reset operations may not be performed.

As another example, when the cell change/handover is triggered/initiated/executed/applied based on L1L2 signaling/execution indication information/TCI state/execution condition/event/related procedure/operation, when the execution condition is met by evaluating the execution condition/event configured in the UE, when the specific procedure/operation (e.g., measurement, event detection, condition satisfaction, TCI state update application, etc.) is performed in the UE according to reception of L1/L2 signaling and the corresponding configuration, when L1/L2 signaling for triggering/initiating/execution/application of the LTM operation is received, or when the LTM operation is performed from the lower layer to the higher layer. When triggering/initiating/executing/applying is indicated, when the corresponding operation of the MAC entity is requested from the lower layer (e.g., PHY), or when the corresponding operation of the MAC entity is requested from the higher layer (e.g., RRC), the MAC entity of the UE may perform only some of the following operations related to MAC reset. Alternatively, the MAC entity of the UE may not perform one or more of the operations. Alternatively, the MAC entity of the UE may differently define and perform one or more operations.
- (For the Bj parameter used for the logical channel priority procedure), initialize Bj to 0 for each logical channel
- stop all timers (if being operated)
- Consider that time alignment timers (timeAlignmentTimers) have expired
- Set NDIs for uplink HARQ process to 0
- If there is an ongoing random access procedure, stop it
- If any, discard explicitly signaled contention-free Random Access Resources for 4-step RA type and 2-step RA type
- flush Msg3/MSGA buffer
- If any, cancel the triggered scheduling request procedure
- If any, cancel the triggered buffer state reporting procedure
- If any, cancel the triggered power headroom reporting procedure
- If any, cancel the triggered BFR
- If any, cancel the triggered Configured uplink grant confirmation
- Flush the soft buffer for all DL HARQ processes
- For each DL HARQ process, consider the next received transmission as a TB as the very first transmission
- If any, release Temporary C-RNTI
- Reset BFI_COUNTERs

In this disclosure, a MAC partial reset denotes the operation/procedure not to perform all/some operations performed by the MAC entity for the MAC reset in the cell change process, the operation/procedure to perform some corresponding operations differently, or the MAC operation/procedure performed for the LTM operation. This is only for convenience of description. The MAC partial reset may be replaced with any other name (e.g. MAC configuration, MAC reconfiguration, MAC maintenance, MAC switching, MAC reconfiguration, MAC restart, LTM MAC procedure etc.).

For example, during an LTM carried out by the same MAC entity, the data processing procedure-related parameter may not be reset (maintained). Conversely, the corresponding procedure may reset the random access procedure/beam failure procedure-related parameter.

As another example, the corresponding procedure may include an HARQ entity for the source cell and an HARQ entity for the target cell separately (when the LTM operation is performed through the same MAC entity). The corresponding procedure may add the HARQ entity for the target cell/candidate cell/second TRP/second TRP-associated cell/non-serving cell. Alternatively, the corresponding procedure may add a cell for the target cell/candidate cell/second TRP/second TRP-associated cell/non-serving cell. For example, the corresponding procedure may add a cell configuration for the corresponding target cell/candidate cell/second TRP/second TRP-associated cell to the cell group configuration. As another example, the corresponding procedure may include information for indicating that the corresponding cell is the target cell/candidate cell/second TRP/second TRP-associated cell in the SCell configuration and configure/indicate the same to the UE. As another example, the corresponding procedure may add a cell configuration for the target cell/candidate cell/second TRP/second TRP-associated cell to the corresponding MAC configuration (e.g., MAC-CellGroupConfig).

As another example (when the LTM operation is performed through two MAC entities), the MAC entity of the source cell/first TRP/first TRP-associated cell/serving cell may not be reset. The corresponding MAC entity configuration may be maintained. The MAC entity for the target cell/candidate cell/second TRP/second TRP-associated cell/non-serving cell may be established.

As another example, the UE variable Bj may be maintained during the LTM operation (or during any period defined in the corresponding handover).

As another example, during the LTM operation or for any period defined in the corresponding handover, the (full/partial) MAC timer may be maintained.

As another example, during the LTM operation or during any period defined in the corresponding handover, if any, the triggered scheduling request procedure/triggered buffer state reporting procedure/triggered power headroom reporting procedure/triggered BFR/triggered Configured uplink grant confirmation may be maintained. For example, it may be considered that the corresponding procedure is pending.

As described above, the disclosure provides a specific configuration and signaling method for controlling mobility based on L1/L2 for a UE. Accordingly, it effective reduces a latency that may occur when a cell is changed.

Hereinafter, configurations of a UE and a base station capable of performing all or some of the above-described embodiments of the disclosure are described with reference to the drawings.

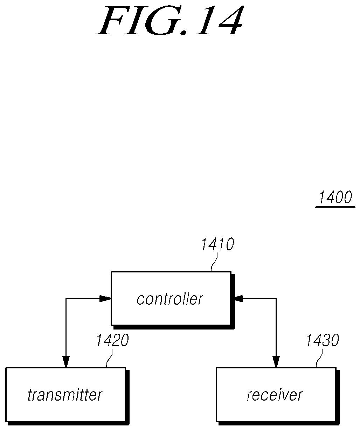

FIG. 14 is a block diagram illustrating a configuration of a UE according to an embodiment.

Referring to FIG. 14, a UE 1400 performing a cell change operation may include a receiver 1430 receiving a higher layer message including one or more pieces of candidate target cell configuration information for an L1/L2-triggered mobility (LTM) operation, a transmitter 1420 transmitting an L1 measurement result for a candidate target cell based on the higher layer message, and a controller 1410 performing the cell change operation without RRC reconfiguration by applying candidate target cell configuration information for a target cell based on a MAC CE.

The receiver 1430 may further receive a medium access control control element (MAC CE) that indicates (e.g., instruct) to perform an LTM operation to the target cell.

According to an embodiment, the receiver 1430 may receive an RRC message including one or more candidate target cell configuration information from a base station or a TRP. The RRC message may include one or more pieces of candidate target cell configuration information, and each piece of candidate target cell configuration information may be separately included for each candidate target cell.

According to an embodiment, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI).

Meanwhile, the candidate target cell configuration information includes information for performing L1 measurement on the serving cell or the candidate target cell and transmitting the L1 measurement result. For example, the controller 1410 controls the operation of measuring the channel state for the serving cell or the candidate target cell using the candidate target cell configuration information. The transmitter 1420 transmits the measured channel state or channel quality information to the base station based on the information for transmission of the measurement result included in the candidate target cell configuration information. For example, the transmitter 1420 may transmit the measurement result to the base station based on the information for transmission of the measurement result included in the candidate target cell configuration information. For example, when a condition for triggering transmission of the measurement result is met, the transmitter 1420 may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell. In other words, when comparing the measurement result of the source PSCell with the measurement result of the candidate target cell, comparison is performed by adding/subtracting an offset preset or included in the configuration information about the candidate target cell to/from the measurement result of the source PSCell. If the comparison result shows that the channel state of the candidate target cell is better, reporting of the measurement result may be triggered.

Further, the receiver 1430 may receive instruction information instructing to perform the LTM operation included in the MAC CE. As another example, the receiver 1430 may identify information about the target cell included in the MAC CE and receive an LTM operation execution instruction to the target cell. Through the MAC CE, the controller 1410 should obtain information about the target cell to instruct to perform an LTM operation and to perform the cell change. To that end, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may be composed of candidate target cell configuration information ID or index information. Further, the MAC CE may include at least one of the TCI state ID, the bandwidth part ID, and the TAG.

Further, when the MAC CE is received, the controller 1410 may identify the target cell to perform cell change based on the corresponding MAC CE. For example, the controller 1410 identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the controller 1410 may identify the target cell through the MAC CE.

When the target cell is identified, the controller 1410 applies the candidate target cell configuration information applied to the target cell to the UE. Further, the controller 1410 performs a cell change operation to the target cell using the candidate target cell configuration information about the target cell without performing the RRC reconfiguration operation.

Meanwhile, the controller 1410 may store/apply the one or more candidate target cell configuration information in the UE until higher layer signaling for releasing the candidate target cell configuration information is received. For example, when the configuration information about the plurality of candidate target cells is received through the higher layer message, the controller 1410 may complete cell change to the corresponding target cell by applying any one of the configuration information about the candidate target cells through the above-described MAC CE. Even after the cell change is completed, the controller 1410 may still maintain the plurality of candidate target cell configuration information valid. Accordingly, when the MAC CE indicating the LTM operation is received from the base station again after the cell change, the controller 1410 performs the cell change operation by effectively using the stored candidate target cell configuration information. In other words, the release, change, addition, etc. of the candidate target cell configuration information configured/stored in the UE may be performed only by separate higher layer signaling.

Further, the transmitter 1420 and the receiver 1430 are used to transmit or receive signals or messages or data necessary for performing the above-described embodiments, with the base station. Further, the controller 1410 controls the overall operation of the UE 1400 required to perform the above-described embodiments.

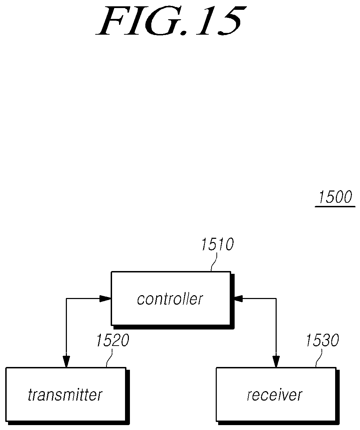

FIG. 15 is a block diagram illustrating a configuration of a base station according to an embodiment.

Referring to FIG. 15, a base station 1500 for controlling a cell change operation of a UE may include a transmitter 1520 transmitting a higher layer message including one or more pieces of candidate target cell configuration information for an L1/L2-triggered mobility (LTM) operation, a receiver 1530 receiving an L1 measurement result for a candidate target cell, and a controller 1510 determining to perform the LTM operation for a target cell based on the L1 measurement result.

The transmitter 1520 may further transmit a medium access control control element (MAC CE) indicating to perform an LTM operation to the target cell.

According to an embodiment, the transmitter 1520 may transmit an RRC message including one or more pieces of candidate target cell configuration information to the UE. The RRC message may include one or more pieces of candidate target cell configuration information, and each piece of candidate target cell configuration information may be separately included for each candidate target cell. For example, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI).

Meanwhile, the candidate target cell configuration information includes information for performing L1 measurement on the serving cell or the candidate target cell and transmitting the L1 measurement result. For example, the UE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information.

The receiver 1530 receives the measurement result reporting including the L1 measurement result transmitted by the UE. According to an embodiment, the UE may transmit the measurement result to the base station 1500 based on the information for transmission of the measurement result included in the candidate target cell configuration information. For example, when a condition for triggering transmission of the measurement result is met, the UE may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell.

Further, the controller 1510 may determine whether to perform the LTM operation based on the L1 measurement result information of the UE. As another example, the controller 1510 may determine the target cell to be changed through the LTM operation based on the L1 measurement result information of the UE. As such, the controller 1510 may perform an LTM operation on the UE and determine a target cell to be changed by the UE based on the L1 measurement result received from the UE.

When the base station determines to change the cell of the corresponding UE based on the L1 measurement result information received from the UE, the transmitter 1520 may indicate the same through the MAC CE.

For example, the transmitter 1520 may include instruction information to instruct to perform the LTM operation in the MAC CE and transmit the same. As another example, the transmitter 1520 may include information about the target cell in the MAC CE and transmit the same.

Through the MAC CE, the UE may obtain information about the target cell to instruct to perform an LTM operation and to perform the cell change. For example, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message.

For example, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

Meanwhile, the one or more candidate target cell configuration information may be stored and applied in the UE until higher layer signaling for releasing the candidate target cell configuration information is received. The transmitter 1520 may also transmit separate higher layer signaling for indicating the release, change, addition, etc. of the candidate target cell configuration information configured/stored in the UE to the UE.

Further, the transmitter 1520 and the receiver 1530 are used to transmit or receive signals or messages or data necessary for performing the above-described embodiments, with the UE. Further, the controller 1510 controls the overall operation of the base station 1500 required to perform the above-described embodiments.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0000450 filed on January 3, 2022, and 10-2022-0181025 filed on December 21, 2022, in the Korean Intellectual Property Office, the disclosures of which are incorporated by reference herein in their entireties.

## Claims

1. A method for performing a cell change operation by a user equipment (UE), the method comprising:
receiving a higher layer message including one or more pieces of candidate target cell configuration information for an L1/L2-triggered mobility (LTM) operation;
transmitting an L1 measurement result for a candidate target cell based on the higher layer message;
receiving a medium access control control element (MAC CE) indicating to perform the LTM operation to a target cell; and
performing the cell change operation without RRC reconfiguration by applying the candidate target cell configuration information for the target cell based on the MAC CE.

2. The method of claim 1, wherein the higher layer message includes at least one of cell group configuration information, identification information about the candidate target cell configuration information, bandwidth part identification information, and transmission configuration indication (TCI) state configuration information.

3. The method of claim 2, wherein the TCI state configuration information includes at least one of a TCI state ID, a cell index, a cell ID, and a physical cell identity (PCI).

4. The method of claim 1, wherein the candidate target cell configuration information includes information for L1 measurement for a serving cell or the candidate target cell and transmission of the L1 measurement result.

5. The method of claim 1, wherein the transmission of the L1 measurement result is triggered when a measurement result of the candidate target cell has a higher quality than a value obtained by adding/subtracting an offset to/from a measurement result of a source PSCell.

6. The method of claim 1, wherein the MAC CE includes at least one of identification information about the candidate target cell configuration information, a TCI state ID, bandwidth part identification information, and a timing advance command.

7. The method of claim 1, wherein the candidate target cell configuration information is applied until higher layer signaling for releasing the candidate target cell configuration information is received.

8. A method for controlling a cell change operation of a UE by a base station, the method comprising:
transmitting a higher layer message including one or more pieces of candidate target cell configuration information for an L1/L2-triggered mobility (LTM) operation;
receiving an L1 measurement result for a candidate target cell;
determining to perform the LTM operation on a target cell based on the L1 measurement result; and
transmitting a medium access control control element (MAC CE) indicating to perform the LTM operation to the target cell.

9. The method of claim 8, wherein the higher layer message includes at least one of cell group configuration information, identification information about the candidate target cell configuration information, bandwidth part identification information, and transmission configuration indication (TCI) state configuration information.

10. The method of claim 9, wherein the TCI state configuration information includes at least one of a TCI state ID, a cell index, a cell ID, and a physical cell identity (PCI).

11. The method of claim 8, wherein the candidate target cell configuration information includes information for L1 measurement for a serving cell or the candidate target cell and transmission of the L1 measurement result.

12. The method of claim 8, wherein the MAC CE includes at least one of identification information about the candidate target cell configuration information, a TCI state ID, bandwidth part identification information, and a timing advance command.

13. A UE performing a cell change operation, comprising:
a receiver receiving a higher layer message including one or more pieces of candidate target cell configuration information for an L1/L2-triggered mobility (LTM) operation;
a transmitter transmitting an L1 measurement result for a candidate target cell based on the higher layer message; and
a controller performing the cell change operation without RRC reconfiguration by applying the candidate target cell configuration information for a target cell based on a MAC CE, wherein the receiver receives the medium access control control element (MAC CE) indicating to perform the LTM operation to the target cell.

14. The UE of claim 13, wherein the higher layer message includes at least one of cell group configuration information, identification information about the candidate target cell configuration information, bandwidth part identification information, and transmission configuration indication (TCI) state configuration information.

15. The UE of claim 14, wherein the TCI state configuration information includes at least one of a TCI state ID, a cell index, a cell ID, and a physical cell identity (PCI).

16. The UE of claim 13, wherein the candidate target cell configuration information includes information for L1 measurement for a serving cell or the candidate target cell and transmission of the L1 measurement result.

17. The UE of claim 13, wherein the transmission of the L1 measurement result is triggered when a measurement result of the candidate target cell has a higher quality than a value obtained by adding/subtracting an offset to/from a measurement result of a source PSCell.

18. The UE of claim 13, wherein the MAC CE includes at least one of identification information about the candidate target cell configuration information, a TCI state ID, bandwidth part identification information, and a timing advance command.

19. The UE of claim 13, wherein the candidate target cell configuration information is applied until higher layer signaling for releasing the candidate target cell configuration information is received.
